# EUROPEAN PATENT SPECIFICATION

(11) **EP 2 799 174 B1**
(45) Date of publication and mention of the grant of the patent: **13.09.2017**
(21) Application number: 14166161.1
(22) Date of filing: 28.04.2014
(51) Int. Cl.: B23D 45/14, B27C 9/02, B27B 5/20, B23D 47/12

(54) **Electric spindle with double output**
Elektrische Spindel mit zwei Ausgängen
Broche électrique à double sortie

(30) Priority: 03.05.2013 IT PD20130118
(43) Date of publication of application: 05.11.2014
(73) Proprietor: Essetre Holding SpA, 36016 Thiene (VI) (IT)
(72) Inventor: Sella, Andrea, 36035 MARANO VICENTINO VI (IT)
(74) Representative: Modiano, Micaela Nadia

(56) References cited:
- EP-A1- 1 579 939
- GB-A- 190 721 281
- IT-A1- PD20 090 203
- US-A- 3 103 838
- US-A- 3 621 546
- US-A1- 2004 231 952

## Description

The present invention relates to an electric spindle with double output according to the preamble of claim 1. Such an apparatus is known from EP2275237A.

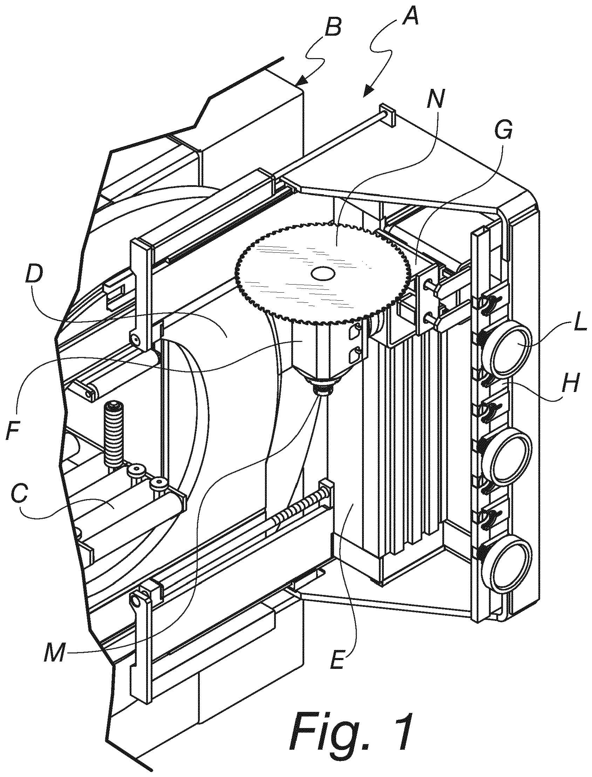

Nowadays machining centers are known and are appreciated for their versatility, an example of which is shown in Figure 1 and designated therein with the letter A, for machining wooden beams and the like, of the type comprising:
- a portal casing B which is provided with an opening for the passage of a beam to be machined,
- means C of advancement for a beam to be machined, which define an axis of insertion of the beam through the passage opening,
- a substantially annular base D, supported by the casing B so that it can rotate about a rotation axis that is substantially parallel to the axis of insertion of the beam,
- a slider E supported by the base D, supporting a working head F by way of a runner G supported by the slider E, the working head F being supported so that it can rotate about a working axis; the slider E is supported by the base D so that it can slide in a first direction of sliding that is perpendicular to the rotation axis of the base D, and the runner G is supported by the slider E so that it can slide in a second direction of sliding that is perpendicular to the first direction of sliding and to the rotation axis of the base D.

Such machining center comprises a tool-holder H, which is adapted to support interchangeable tools L for the working head F.

The working head F is constituted by an electric spindle with double output, which comprises an electric motor adapted to drive a driving shaft that supports at one end a coupling M for interchangeable milling cutter tools, and at the opposite end a blade tool N.

Such a machining center is for example described and claimed in EP 2275237 B1 in the name of this same applicant.

The electric spindle with double output with interchangeable milling cutter tool/blade tool consists of a conventional electric spindle with automatic tool changing, to which a second output is added with a blade, which combines the necessity for the milling cutter tools to be able to work at up to 18000 rpm, with the necessity for the blade tool to work at a maximum cutting speed of 80m/sec, which for example with use of a 600 mm diameter blade translates into a rotation rate of approximately 2500 rpm.

The electric motor of such conventional electric spindle with double output is directly connected to the tool, whereas the blade is rotated by way of an automatically switchable electromagnetic coupling.

However, such an electric spindle with double output, although being reliable, requires a certain interval of time in order to engage the coupling, as such engagement necessitates stopping the electric motor, performing the coupling of the secondary shaft that supports the blade tool, and restarting the electric motor.

Such technical solution thus imposes a pause in machining the beam whenever the blade tool has to be actuated, owing to the interval for engaging the coupling.

The machining pause involves an inevitable reduction in the rate of production of the machining center.

Furthermore, the use of electromagnetic coupling requires a controlled acceleration of the tools, in order to prevent the electromagnetic coupling from slipping.

Thus electric and electronic management is required of such electromagnetic coupling, and such management must be carried out with the adapted control and management instruments.

The aim of the present invention is to provide an electric spindle with double output which is capable of overcoming the drawbacks of conventional electric spindles with double output.

Within this aim, an object of the invention is to provide an electric spindle that makes it possible for the machining center of which it is part to operate with better rates of production than the known art.

Another object of the invention is to provide an electric spindle that does not require dead times in order to bring the blade tool up to the correct operating speed.

Another object of the invention is to provide an electric spindle that is simpler to manage, both electrically and electronically.

Another object of the invention is to provide an electric spindle with double output which can be produced using known systems and technologies.

In accordance with the invention, there is provided an electric spindle with double output as defined in the appended claims.

Further characteristics and advantages of the invention will become more apparent from the description of a preferred, but not exclusive, embodiment of the electric spindle according to the invention, which is illustrated by way of non-limiting example in the accompanying drawings wherein:
Figure 1 is a perspective view of a conventional machining center for beams;

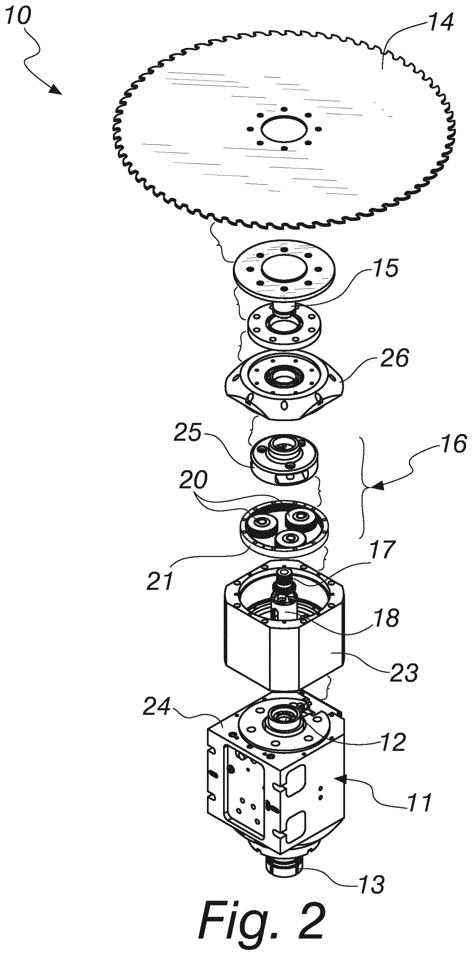

Figure 2 is an exploded perspective view of an electric spindle according to the invention;

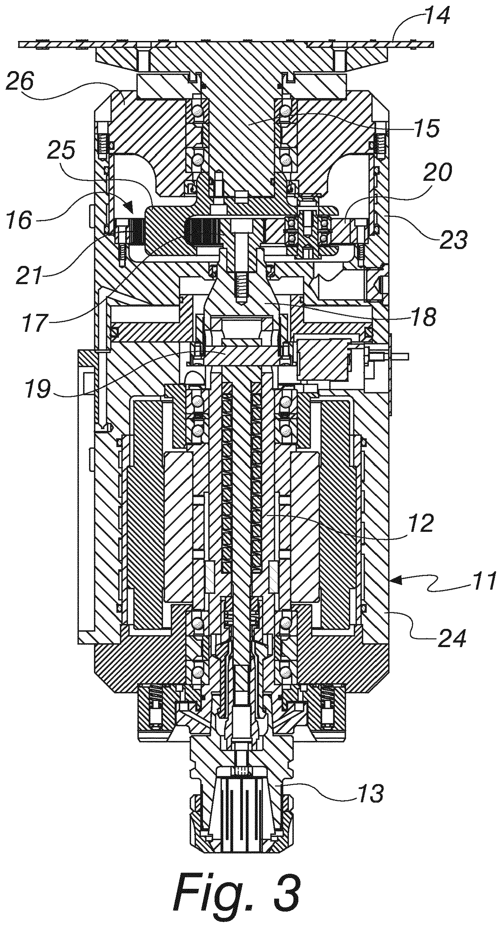

Figure 3 is a sectional side view of the electric spindle according to the invention.

With reference to the figures, an electric spindle with double output according to the invention is generally designated with the reference numeral 10.

Such electric spindle 10 comprises an electric motor 11 the driving shaft 12 of which actuates at one end a coupling 13 for interchangeable milling cutter tools and the like, and at the opposite end a blade tool 14. According to the invention, the blade tool 14 is supported by a driven secondary shaft 15 that is actuated by the driving shaft 12 due to the interposition of an epicyclic reduction unit 16. Furthermore, according to the invention, the sun pinion 17 of the epicyclic reduction unit 16 receives torque by way of a sleeve 18 that is fixed to the driving shaft 12 by way of a transverse pin 19.

The epicyclic reduction unit 16 also comprises the planetary gears 20 and the ring gear provided internally with teeth 21.

The toothed ring gear 21 is fixed inside a containment body 23 that in turn is fixed to the case 24 of the electric motor 11.

The planetary gears 21 are coupled rotatably to a rotating cage 25, on which the driven secondary shaft 15 is fixed coaxially.

The containment body 23 is closed by a cover 26.

In particular, in an embodiment the epicyclic reduction unit 16 is implemented so as to provide a reduction ratio of 6, for a rotation rate of the driving shaft 12 of 15,000 rpm, the driven secondary shaft 15 rotating at a rate of 2,500 rpm.

The speed of 15,000 rpm is acceptable for machining wood using milling cutters of a small diameter, at the end for the coupling of interchangeable tools, and at the other end 2,500 rpm is the optimal speed for a rotating blade 14 of 600 millimeters in diameter.

Such electric spindle 10 has a cooling system that uses refrigerated water and is adapted to pass through a helical groove defined both in the containment body 23 on the side of the blade tool and inside the case 24 of the electric motor, the two portions of the helical groove being arranged serially.

Furthermore the gearwheels of the epicyclic reduction unit operate in an oil bath.

In practice it has been found that the invention fully achieves the intended aim and objects.

In fact, with the invention an electric spindle with double output has been devised which makes it possible for the machining center to operate without pauses owing to engagement of the coupling in order to actuate the blade tool as with conventional electric spindles with double output.

The use of the epicyclic reduction unit 16, which is always and constantly meshed and functionally connected to the driving shaft 12, makes it possible to increase the torque of the cutting force of the blade by a factor of at least three with a reduction R=6 for the epicyclic reduction unit, and to reduce the acceleration time of the tool, necessary in the prior art in order to prevent the coupling from slipping.

Furthermore, with the invention an electric spindle has been devised which, having no electromagnetic coupling, enables simpler electrical and electronic management of its operation.

With the invention, an electric spindle has been devised which can be installed immediately on conventional machining centers.

Last but not least, with the invention an electric spindle with double output has been devised which can be made using conventional systems and technologies.

The invention, thus conceived, is susceptible of numerous modifications and variations, all of which are within the scope of the appended claims. Moreover, all the details may be substituted by other, technically equivalent elements.

## Claims

1. An electric spindle with double output (10), comprising an electric motor (11) the driving shaft (12) of which actuates at one end a coupling (13) for interchangeable milling cutter tools and the like, and, at the opposite end, a blade tool (14), said spindle being **characterized in that** said blade tool (14) is supported by a driven secondary shaft (15) that is actuated by said driving shaft (12) by way of the interposition of an epicyclic reduction unit (16), and **in that** the sun pinion (17) of the epicyclic reduction unit (16) is receiving torque by way of a sleeve (18) that is fixed to the driving shaft (12) by way of a transverse pin (19).

2. The electric spindle according to claim 1, **characterized in that** said epicyclic reduction unit (16) comprises planetary gears (20) and a ring gear (21) provided internally with teeth, said toothed ring gear (21) being fixed inside a containment body (23) that in turn is fixed to a case (24) of the electric motor (11).

3. The electric spindle according to claim 2, **characterized in that** said planetary gears (20) are coupled rotatably to a rotating cage (25), on which the driven secondary shaft (15) is fixed coaxially.

4. The electric spindle according to one or more of the preceding claims, **characterized in that** said epicyclic reduction unit (16) is implemented so as to provide a reduction ratio of 6, for a rotation rate of the driving shaft (12) of 15,000 rpm, the driven secondary shaft (15) rotating at a rate of 2500 rpm.

## Patentansprüche

1. Eine elektrische Spindel mit zwei Ausgängen (10), die einen Elektromotor (11) umfasst, dessen Antriebswelle (12) an einem Ende eine Kopplung (13) für austauschbare Fräswerkzeuge und Ähnliches und am gegenüberliegenden Ende ein Schneidwerkzeug (14) betätigt, wobei die Spindel dadurch gekennzeichet ist, dass das Schneidwerkzeug (14) von einer sekundären Abtriebswelle (15) getragen wird, die von der Antriebswelle (12) durch Anordnung eines Planetenuntersetzungsgetriebes (16) dazwischen angetrieben wird, und dadurch, dass das Sonnenrad (17) des Planetenuntersetzungsgetriebes (16) ein Drehmoment über eine Hülse (18) empfängt, welche mit Hilfe eines Querstifts (19) an der Antriebswelle (12) befestigt ist.

2. Die elektrische Spindel gemäß Anspruch 1, **dadurch gekennzeichnet, dass** das Planetenuntersetzungsgetriebe (16) Planetenräder (20) und ein Hohlrad (21) umfasst, das innen mit Zähnen ausgestattet ist, wobei das gezahnte Hohlrad (21) in einem Behälterkörper (23) befestigt ist, welcher wiederum an einem Gehäuse (24) des Elektromotors (11) befestigt ist.

3. Die elektrische Spindel gemäß Anspruch 2, **dadurch gekennzeichnet, dass** die Planetenräder (20) drehbar mit einem Drehkorb (25) gekoppelt sind, an welchem die sekundäre Abtriebswelle (15) koaxial befestigt ist.

4. Die elektrische Spindel gemäß einem oder mehreren der obigen Ansprüche, **dadurch gekennzeichnet, dass** das Planetenuntersetzungsgetriebe (16) so implementiert ist, dass es bei einer Rotationsrate der Antriebswelle (12) von 15.000 U/min ein Untersetzungsverhältnis von 6 bereitstellt, wobei sich die sekundäre Abtriebswelle (15) mit einer Geschwindigkeit von 2500 U/min dreht.

## Revendications

1. Broche électrique à double sortie (10), comprenant un moteur électrique (11) dont l'arbre d'entrainement (12) actionne, à une extrémité, un accouplement (13) pour des outils de fraisage interchangeables et similaires, et, à l'extrémité opposée, un outil tranchant (14), ladite broche étant **caractérisée en ce que** ledit outil tranchant (14) est supporté par un arbre secondaire mené (15) qui est actionné par ledit arbre d'entrainement (12) grâce à l'interposition d'un réducteur épicyclique (16), et **en ce que** le pignon solaire (17) du réducteur épicyclique (16) reçoit un couple par l'intermédiaire d'un manchon (18) qui est fixé sur l'arbre d'entrainement (12) par l'intermédiaire d'une clé transversale (19).

2. Broche électrique selon la revendication 1, **caractérisée en ce que** ledit réducteur épicyclique (16) comprend un train épicycloïdal (20) et une couronne de train planétaire (21) munie intérieurement de dents, ladite couronne dentée de train planétaire (21) étant fixée à l'intérieur d'un corps de boitier (23) qui est, à son tour, fixé sur un carter (24) du moteur électrique (11).

3. Broche électrique selon la revendication 2, **caractérisée en ce que** ledit train épicycloïdal (20) est couplé, en rotation, à une cage rotative (25) sur laquelle l'arbre secondaire mené (15) est fixé coaxialement.

4. Broche électrique selon une ou plusieurs des revendications précédentes, **caractérisée en ce que** ledit réducteur épicyclique (16) est mis en oeuvre de manière à fournir un rapport de réduction de 6, pour une vitesse de rotation de l'arbre d'entrainement (12) de 15.000 tr/min, l'arbre secondaire mené (15) tournant à une vitesse de 2.500 tr/min.
